# EUROPEAN PATENT APPLICATION

(11) **EP 1 298 541 A2**
(43) Date of publication of application: **02.04.2003**
(21) Application number: 02016653.4
(22) Date of filing: 25.07.2002
(51) Int. Cl.: G06F 17/30

(54) **System and method for creating web pages from processed measurement data**

(30) Priority: 28.09.2001 US 967288
(71) Applicant: Agilent Technologies, Inc., Palo Alto, CA 94306 (US)
(72) Inventor: Abramovitch, Daniel Y., Palo Alto, California 94306 (US)
(74) Representative: Liesegang, Roland, Dr.-Ing.

(57) **Abstract**

A system and method for automatically capturing processed instrument measurement data (170) into web pages (130) is disclosed. One or more routines (150) are used to access the processed measurement data (170) and generate one or more web pages (130) that include information representing the processed measurement data (170). The web page(s) (130) can be dynamically created or statically created with links (135) to the processed measurement data (175), output (162 or 164) of the processed measurement data and the one or more routines (150). The web page (130) can further include links (135) to measurement specific commentary.

## Description

### BACKGROUND OF THE INVENTION

### Technical Field of the Invention

The present invention relates generally to measurement instruments, and specifically to storage and retrieval of processed measurement data.

### Description of Related Art

A measurement instrument is any device capable of measuring a desired value. Although not an exhaustive list, some examples of measurement instruments include a spectrum analyzer, signal analyzer, data generator, time interval analyzer or a digital oscilloscope. Measurement instruments make physical measurements in real time to produce a grouping of raw measurement data. Once the raw measurement data is collected, the data is processed to be put into a useful form for analysis and display.

After the raw measurement data is processed, the processed data is typically stored in a fixed media, such as a hard copy print out within a notebook, internal instrument memory or a computer file. However, later retrieval and use of the processed data from the fixed media can be problematic. For example, the user must remember which fixed media the measurement is stored in, and determine where that fixed media is currently located. Likewise, if a large group of measurement data is involved, storing and retrieving the measurement data can be a time consuming process. Therefore, what is needed is an archival mechanism for processed measurement data that speeds the storage and retrieval of measurement data gathered from instruments.

### SUMMARY OF THE INVENTION

The present invention provides a system and method for automatically capturing processed instrument measurement data into web pages. One or more routines are used to access the processed measurement data and generate one or more web pages that include information representing the processed measurement data. The web page(s) can be dynamically created or statically created with links to the processed measurement data, output of the processed measurement data and the one or more routines. The web page can further include links to measurement specific commentary.

Advantageously, the automatic generation of web pages from measurement data makes it possible to store and organize large groups of processed measurement data on-line. In addition, the rapid access and visual content of web pages makes the process of locating and viewing processed measurement data trivial. As a further advantage, the system and method described herein can be easily integrated with web-enabled instrument interface software programs that allow users to view virtual instrument panels remotely via the web. Furthermore, the invention provides embodiments with other features and advantages in addition to or in lieu of those discussed above. Many of these features and advantages are apparent from the description below with reference to the following drawings.

### BRIEF DESCRIPTION OF THE DRAWINGS

The disclosed invention will be described with reference to the accompanying drawings, which show important sample embodiments of the invention and which are incorporated in the specification hereof by reference, wherein:
FIG. 1 is an exemplary functional block diagram illustrating the process of automatically capturing processed instrument measurement data into web pages;
FIG. 2 is a flowchart illustrating the exemplary steps for capturing processed instrument measurement data into web pages;
FIG. 3 is a flowchart illustrating exemplary steps for processing measurement data and creating a web page using the processed measurement data in accordance with embodiments of the present invention;
FIG. 4 is a process flow of a simplified script for creating a web page using processed measurement data;
FIG. 5 is a flowchart illustrating alternative exemplary steps for processing measurement data and creating a web page using the processed measurement data in accordance with embodiments of the present invention;
FIG. 6 is a flowchart illustrating further alternative exemplary steps for processing measurement data and creating a web page using the processed measurement data in accordance with embodiments of the present invention;
FIG. 7 illustrates exemplary elements of the web page;
FIG. 8 illustrates exemplary elements of an index page; and
FIG. 9 is a functional block diagram illustrating access to the web page containing the processed instrument measurement data.

### DETAILED DESCRIPTION OF THE EXEMPLARY EMBODIMENTS OF THE INVENTION

The numerous innovative teachings of the present application will be described with particular reference to the exemplary embodiments. However, it should be understood that these embodiments provide only a few examples of the many advantageous uses of the innovative teachings herein. In general, statements made in the specification do not necessarily delimit any of the various claimed inventions. Moreover, some statements may apply to some inventive features, but not to others.

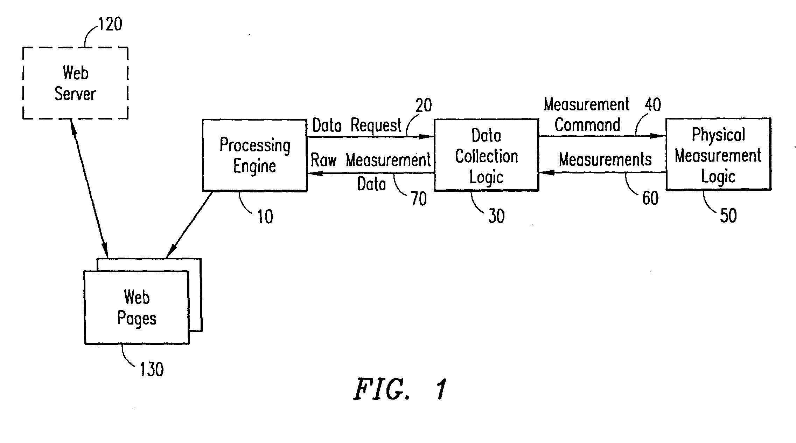

Referring now to FIG. 1, an overview of the process for capturing processed instrument measurement data into web pages is illustrated. A Processing Engine 10 is responsible for initiating the measurement process and processing a group of raw measurement data. Data requests 20 submitted by the Processing Engine 10 are handled by Data Collection Logic 30. Each data request 20 instructs the Data Collection Logic 30 to gather one or more specific measurements 60 and transmit a group of raw measurement data 70 to the Processing Engine 10. The Data Collection Logic 30 uses the data request 20 to formulate a measurement command 40 to Physical Measurement Logic 50. The measurement command 40 directs the Physical Measurement Logic 50 to take the requested measurements 60 and pass the measurements 60 to the Data Collection Logic 30.

The Processing Engine 10 processes the received group of raw measurement data 70 into a useable form for analysis and display and saves the processed measurement data and any output from the processed measurement data in a computer-readable media (i.e., memory). In accordance with embodiments of the present invention, the Processing Engine 10 also uses one or more software routines (e.g., programs or scripts) to create one or more web pages 130 representing the processed measurement data. The one or more routines are capable of accessing the saved processed measurement data and any output of the processed measurement data (e.g., table, graph, chart, etc.) and displaying the processed measurement data and output of the processed measurement data in-line. Once created, the web page(s) 130 can be stored in a web server 120 for later retrieval. It should be understood that the web server 120 can be located on a separate server from the Processing Engine 10 or on the same server as the Processing Engine 10.

In one embodiment, the Processing Engine 10, Data Collection Logic 30 and Physical Measurement Logic 50 are all located within a measurement instrument. Such measurement instruments include, but are not limited to, digital oscilloscopes, spectrum analyzers, dynamics analyzers, data generators and time interval analyzers. However, in other embodiments, the Processing Engine 10, and possibly the Data Collection Logic 30, can be located on a digital computer separate from the measurement instrument. For example, the measurement instrument can be connected to the digital computer via a standard HPIB/GPIB connection. In still further embodiments, the Processing Engine 10, Data Collection Logic 30 and Physical Measurement Logic 50 can all be implemented on a digital computer. As an example, an advanced multimedia input card can be used to take measurements on a digital computer to obviate the need for a separate hardware measurement instrument.

It should be noted that the Processing Engine 10 may be resident in one or more digital computers. For example, if a lab computer is not capable of connecting to a web server, the final processing requires more time and/or memory than is available on the lab computer, and/or the user wants to check measurements before saving the processed measurement data to a web page, the processed measurement data may be sent to a second computer for final processing and/or creation of the web page.

Advantageously, the Processing Engine 10 may be integrated with an instrument interface processing software program to allow the web page creation process described herein to be automated with a relatively small amount of new programming techniques. Instrument interface processing software programs, such as VEE™ produced by Agilent Technologies, LabView™ produced by National Instruments or MatLab™ produced by The Mathworks, electronically transfer raw data from the instrument to one or more digital computers for processing. For example, LabView™ has recently provided an Internet toolkit that enables a user at a remote location to access an instrument via the web. The instrument panel is viewed on the remote computer as a web page, and the results of an experiment using the instrument are displayed on the web page. Likewise, VEE™ has similar capabilities that allow the user to view virtual instrument panels remotely via the web.

Many of the main outputs of data processing programs are graphical. However, not all graphics files provide the necessary resolution for printing in documents. For example, most web browsers can display in-line file formats, such as GIF, JPEG, portable network graphics (PNG), etc. However, some in-line file formats use bit map graphics, and thus may reproduce poorly when included in documents. Therefore, it may also be useful for the Processing Engine 10 to produce a resolution-independent graphics file (e.g., Postscript or Encapsulated Postscript) that may be more suitable for printing in documents in addition to the in-line files.

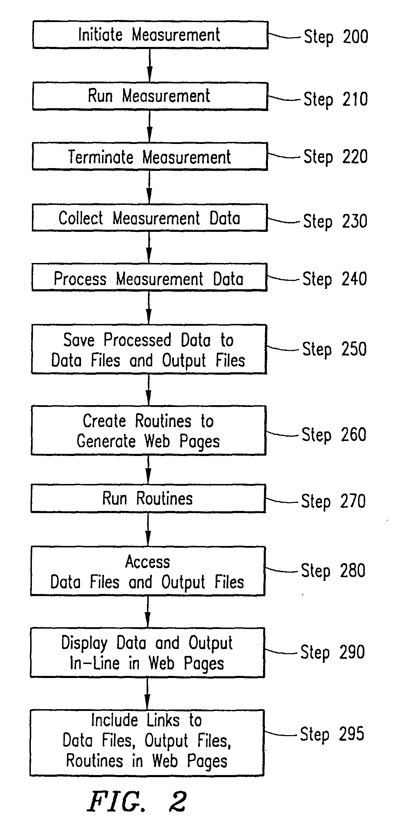

FIG. 2 illustrates the exemplary steps for creating a web page from processed measurement data. The measurement process includes the steps of initiating the measurement (step 200), running the measurement (step 210) and terminating the measurement (step 220). Once the measurement process is completed, the measurement data is collected (step 230), processed (step 240), using any processing mechanism, and saved to one or more data files and one or more output files (step 250). Thereafter, one or more software routines are created (step 260) to generate the one or more web pages. To generate the web pages, the one or more routines are run (step 270) to access the data files and any output files (step 280) and display the processed measurement data and output of the processed measurement data in-line (step 290). The web page(s) can also include links to the data files, output files and any routines (e.g., programs or scripts) used in the processing of the measurement data and creation of the web page(s) (step 295). The links to the programs or scripts enable a user to reprocess the data and recreate the web page(s), if necessary.

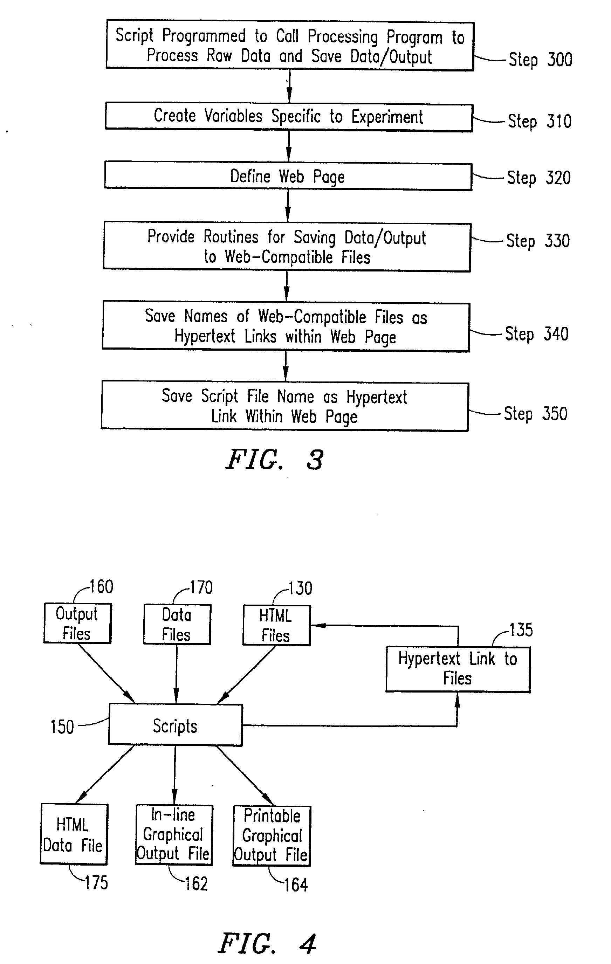

Referring now to FIG. 3, in one embodiment, a user can create one or more specific scripts for creating static web page(s) from processed measurement data. Each specific script can call one or more routines (e.g., other scripts or processing programs) for processing the raw measurement data and saving the processed measurement data and output of the processed measurement data to one or more data files and one or more output files, respectively (step 300). In addition, each specific script can create one or more variables that identify certain aspects of the experiment (step 310).

In order to get an adequate record of an experiment, it may be necessary to not only get all the relevant variables off of the instruments in question, but also to record some variables that never enter into the instruments. The latter variables may describe the conditions under which the experiments were made or specific information about settings of the particular test system that are not easy to collect in an automated fashion. For example, on a disk drive testbed, such variables may include spindle rotational speed, specific disk number, whether or not there is data on the track, etc. The variables pertaining to the experiment may be string, fixed point, floating point or complex, and either scalars or vectors in shape.

The specific script(s) may also define one or more web files (web pages) (step 320) and provide routines for saving the data files, output files and variable files to web-compatible files (step 330). It should be understood that the data files, output files and variable files may not need to be saved to web-compatible files, depending on the script used and the requirements of the user. The specific script(s) may also provide routines for saving the names of the data files, output files and variable files as hypertext links within the web pages (step 340). In addition, either the file name of the specific script(s) or a generic script that calls the one or more specific scripts may be saved as a hypertext link within the web pages (step 350).

As discussed above, providing a link to one or more of the script(s) responsible for creating one or more sections of the web page allows a user to reprocess the measurement data and recreate the web page(s), if needed. For example, if the measurement data has changed or if one or more aspects of the processing program have changed, the user may desire to recreate the web pages with the new data and/or processing. Once the specific script(s) have been created, the specific script(s) or a generic script calling the one or more specific scripts can be run to process the raw measurement data and create the web page(s).

A simplified version of a specific script after the raw measurement data has been processed is shown in FIG. 4. The specific script 150 takes as input the names of the output files 160 and data files 170 and the names of one or more HTML web page files 130. Thereafter, the specific script 150 prints the graphical output files 160 in the form of in-line files 162, such as GIF, JPEG or PNG files, for in-line viewing and printable files 164, such as Postscript or Encapsulated Postscript (EPS), for inclusion in documents for printing. In addition, the specific script 150 prints the data files 170 in the form of Hypertext Markup Language (HTML) data files 175, such as an HTML table of data. Hypertext links 135 to the in-line graphical output files 162, printable graphical output files 164 and HTML data files 175 are then written into the HTML web page files 130. Using similar operations, the specific script 150 can also print out information for the top of the web page 130, the bottom of the web page 130 and even spaces between GIF files 162 within the web page 130 (e.g., for comments about the individual output files). It should be understood that the specific script 150 may also provide domain and password protection schemes that allow the viewing of the data to be restricted.

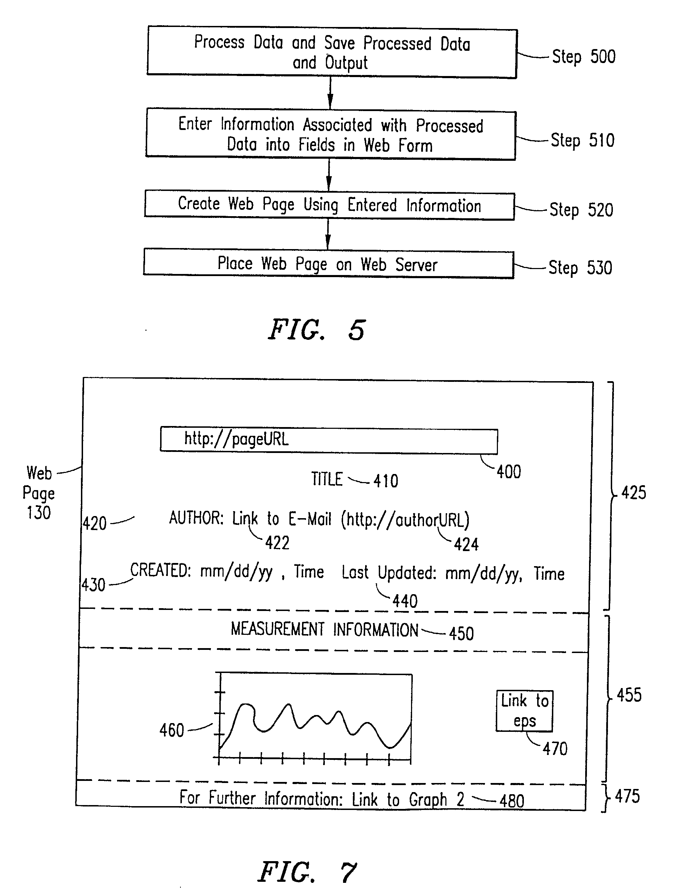

Another static web page creation process is shown in FIG. 5. Instead of creating specific scripts for each group of raw measurement data, a web form can be provided including one or more fields for entering information to create the one or more web pages. After the raw measurement data is processed, using any processing mechanism, the processed data and output are saved to files (step 500). Thereafter, the web form can prompt the user to enter in the fields the file names of the processed data and output, the name of the web page, the directory where the web page is to be stored and other variables associated with the processed data (step 510). Once the requisite information is entered into the web form, a script or program would use the information in the web form to automatically create the web page(s) (step 520). For example, the script or program can save the data files, output files and variable files to web-compatible files (if needed) and create the web page with hypertext links to the file names of the data files, output files and variable files. Thereafter, the web pages(s) can be placed on a web server for later viewing with a standard web browser (step 530). It should be understood that any other process for creating the web page(s) may be used, and that the examples discussed in FIGs. 3 and 5 are included merely for illustrative purposes.

Another embodiment involves a dynamic web page generation process, as shown in FIG. 6. Instead of creating a static HTML file (web page) and storing the static web page on the web server, a program or script (such as a Common Gateway Interface (CGI) script) is stored on the web server. Initially, when the user is running the experiment, the user enters the measurement information (i.e., variables) (step 600) and collects and saves the raw measurement data (step 610). The user also creates a measurement program, such as a measurement specific script, Java servlet or other type of program for processing the data and generating the web pages (step 620). The raw measurement data can be stored within the measurement specific script or as a separate data file. Thereafter, the measurement specific script, program or Java servlet is stored on a web server (step 630). It should be understood that a Java servlet is a piece of code written in Java™ that acts as a small, customized web server within the context of the main web server. Other methods of producing dynamic web pages can be used, and are not limited to the examples discussed herein.

To view the processed data as one or more web pages, the user merely enters the web address or Uniform Resource Locator (URL) of the measurement specific script, program or Java servlet into the user's web browser (step 640). Once accessed, the measurement specific script, program or Java servlet processes the raw measurement data and generates one or more web pages that are sent to the user's web browser (step 650). The generated web pages are not stored on the web server. Instead, the web pages are dynamically created (e.g., the web pages are generated again each time the URL of the measurement specific script, program or Java servlet is entered). Therefore, the web pages can be generated from the most current raw measurement data.

The measurement specific script, program or Java servlet can provide the web pages to the web browser by generating the HTML, Javascript™ or DHTML code for the web pages on the fly or by sending data to a program running in the user's browser, such as a Java applet. For example, a measurement specific script may access the raw measurement data and pass the raw measurement data to one or more generic scripts that actually generate the HTML, Javascript or DHTML code. A common type of script is a CGI script, which can be written in any programming language, such as PEAL™.

In another embodiment, a static web page (HTML file) can be created with one or more dynamic sections. One way to implement a web page with one or more dynamic sections is the Python™ language and specification, which can be compiled into the web server. The Python language and specification allows the HTML code of the web page to have one or more dynamic sections. Python accesses the dynamic sections, runs the measurement specific scripts, programs or Java servlets for the dynamic sections and substitutes the correct HTML code within the dynamic sections dynamically to send to the web browser. However, it should be understood that other languages and specifications, such as PERL, may be used to implement a web page with one or more dynamic sections. It should also be understood that the scripts can be run on the web server or in the user's web page. Various scripting languages can be used on the server side, such as Javascript, PERL and VBscript™. On the user side, both Javascript and VBscript can be used.

An example of the type of information included in a web page is shown in FIG. 7. Among the information included at the top 425 of the web page 130 is the URL 400 of the web page 130, such as http://pageURL. The URL 400 allows the viewer to know where they are and to find the web page 130 again easily from a print out. Other information at the top 425 of the web page 130 may include the title 410 of the experiment and information 420 about the author of the web page, such as the URL 424 of the web page producer (e.g., http://authorURL) and a link 422 to the producer's e-mail address. In addition, the web page creation date/time 430, as well as the date/time that that the web page was last edited 440 may be listed on the top of the web page. Likewise, the creation date and time of the data and output files (not shown) may be included to provide information on the time that the measurement was performed and the time that the measurement data was processed.

Within the body 455 of the web page 130, specific measurement information 450, such as the disk number, the spindle speed, whether or not the signals were normalized, etc., along with comments to help explain the graphics may be included. Of course, the graphs 460 (output files) themselves can be viewed within the web page 130. As discussed above, the output files are included as in-line graphic files, but there may also be hypertext links 470 to one or more resolution independent graphic files. At the bottom 475 of the web page 130, links 480 to other web pages may be included to direct the viewer to other related web pages.

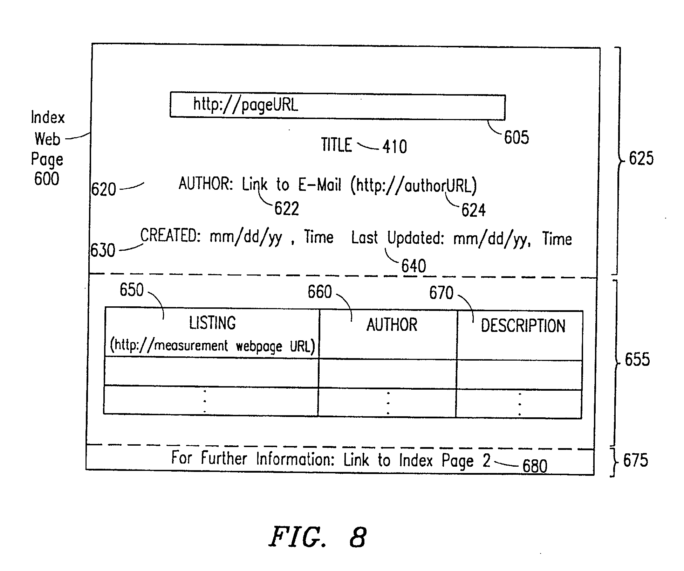

As discussed above, multiple web pages may be created as the result of an instrument measurement. In addition, an experiment may result in the generation of multiple web pages, related to separate stages of the experiment, separate runs of the experiment, different input to the experiment or different variables used in the experiment. In accordance with embodiments of the present invention, and as shown in FIG. 8, in order to easily search for and locate a specific web page, an index web page 600 can be created with links to all of the measurement web pages associated with a particular measurement or experiment.

The index web page 600 can include a header 625 that indicates the URL 605 of the web page 600, such as http://pageURL. The URL 605 allows the viewer to know where they are and to find the web page 600 again easily from a print out. Other information in the header 625 includes the title 610 of the experiment or measurement and information 620 about the author of the index web page, such as the URL 624 of the web page producer (e.g., http://authorURL) and a link 622 to the producer's e-mail address. In addition, the header 625 can include the index web page creation date/time 630, as well as the date/time that that the web page was last edited 640. Within the body 655 of the index web page 600 can be included a listing 650 of each measurement web page, which can be shown as a link to that measurement web page, author information 660 about the author of each measurement web page and description information 670 relating to that measurement web page. The description information 670 can include the title of the measurement web page, variable information associated with that measurement web page, the date and time that the measurement web page was created and last edited and/or any other identifying information. At the bottom 675 of the index web page 600, links 680 to other web pages may be included to direct the viewer to other related index web pages.

The index web page 600 can be created in much the same way as the measurement web pages, as described above. For example, the index web page 600 can be created statically by generating a web-compatible file with a listing of all of the measurement web pages and links to each of the measurement web pages. The index web page 600 can also be created dynamically by creating a dynamic script that is updated each time a new measurement web page is created or that has the capability to search for all of the measurement web pages or measurement dynamic scripts associated together. For example, each measurement web page or measurement dynamic script within a group may have the same title, or may have a unique group HTML tag that the index dynamic script can look for. Likewise, the measurement web pages may include HTML tags or specific program elements that identify description information to be included in the description field of the index web page 600.

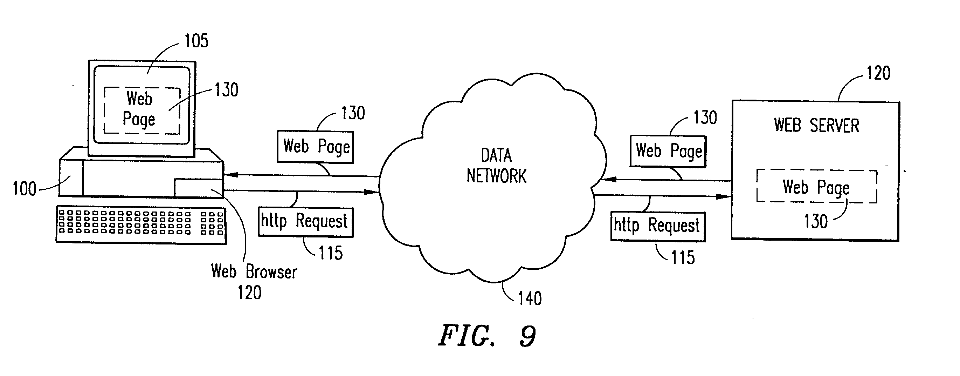

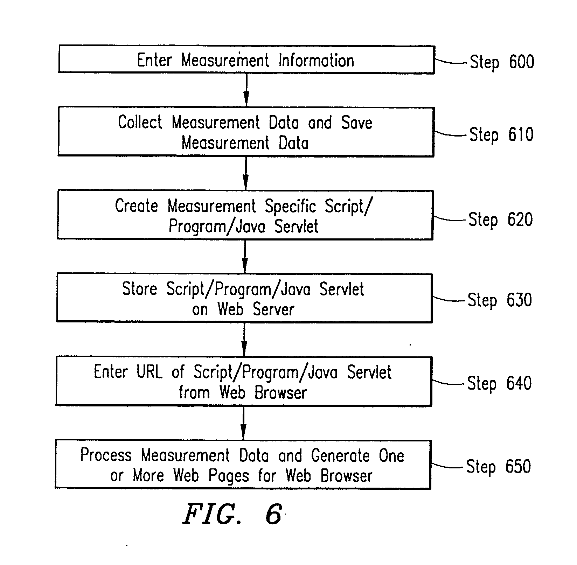

Referring now to FIG. 9, to access the measurement web page 130 or index web page 600 (shown in FIG. 8), a user can enter the address of the web page (e.g., http://pageURL) from a web browser 110 within a computer 100. The web browser sends a hypertext transfer protocol (http) request 115 through a data network 140 to a web server 120 storing the web page 130. It should be understood that the web server 120 is identified from the entered URL. For example, the computer's 100 modem can dial a number for an Internet Service Provider (ISP) (not shown), and an end office (not shown) serving the computer 100 can route the call to the ISP, which routes the request 115 to the web server 120 through various data network 140 devices (not shown), such as hubs, routers and bridges, as is understood in the art. Alternatively, if the computer 100 is connected to a dedicated data network 140 (private intranet), the web browser 110 can send the request 115 directly to the web server 120 through the various data network 140 devices. In another embodiment, the web browser 110 can directly access the web files 130 on any file system that it has access to, bypassing the data network protocols, and in some cases, even the web server 120. Standard Internet security practices can be used to provide access control to the web page whether on a private or public network.

Thereafter, the web server 120 retrieves the requested file (web page) 130 and sends the file 130 back to the computer 100 through the data network 140 for display on a computer screen 105. For example, the web server can generate a markup language page 130, such as a Hypertext Markup Language (HTML) page, containing the information from the hypertext links within the web page. It is this HTML page that is sent to the computer 100 via the web browser 110 as the web page 130. In addition, as discussed above the HTML page 130 may contain further links to other related web pages. It should be understood that other languages can be used to generate dynamic web pages, such as DHTML, CGI scripting or Java applets.

Advantageously, using the web to store processed measurement data allows employees across company divisions rapid and universal access to project measurement data. In addition, the web enables organization of the processed measurement data in a form that is easy to retrieve. Furthermore, by keeping the data files and the scripts in one place, the web pages can be easily updated to reflect new processing algorithms.

As will be recognized by those skilled in the art, the innovative concepts described in the present application can be modified and varied over a wide range of applications. Accordingly, the scope of patented subject matter should not be limited to any of the specific exemplary teachings discussed, but is instead defined by the following claims.

## Claims

1. A method for creating one or more web pages (130) from processed measurement data (170), said method being **characterized by**:
providing at least one routine (step 260) capable of accessing said processed measurement data (170) and generating said one or more web pages (130); and
running said at least one routine (step 270) to generate said one or more web pages (130), said one or more web pages (130) including at least information representing said processed measurement data (170).

2. The method of Claim 1, wherein said steps of providing and running further comprise:
creating a measurement program (step 620) to process raw measurement data (70) obtained from a measurement device to produce said processed measurement data (170) and generate said one or more web pages (130);
storing said measurement program (step 630) on a web server (120);
entering a web address (step 640) for said measurement program from a web browser (120) to access said measurement program; and
running said measurement program (step 650) to produce said processed measurement data (170) and generate said one or more web pages (130) to said web browser (120).

3. The method of Claim 1 or 2, further comprising:
providing at least one variable file (step 310) associated with a variable of said processed measurement data, said at least one variable including at least measurement information relating to said processed measurement data and user-defined comments relating to an output (160) of said processed measurement data; and
generating said one or more web pages (130) to include said at least one variable file (step 320).

4. The method of Claim 3, further comprising:
entering said at least one variable into at least one field on a web form (step 510);
entering file names associated with at least said processed measurement data (170), said output (160) and said one or more web pages (130) into said at least one field on said web form (step 510); and
automatically creating said one or more web pages (step 520) using the information entered into said at least one field on said web form.

5. The method of Claim 3 or 4, further comprising:
saving (step 330) said processed measurement data (170) to at least one web-compatible data file (175) and at least one output (160) of said processed measurement data (170) to at least one web-compatible output file (162 or 164); and
including (step 340) links (135) to said at least one web-compatible data file (175) and said at least one web-compatible output file (162 or 164) in said one or more web pages (130).

6. The method of Claim 5, further comprising:
creating said at least one variable;
providing at least one user-created first routine for saving said at least one variable to at least one web-compatible variable file;
providing at least one user-created second routine for saving said processed measurement data (170) to said at least one web-compatible data file (175); and
providing at least one user-created third routine for saving said output (160) to said at least one web-compatible output file (162 or 164).

7. The method of Claim 6, further comprising:
saving (step 350) a file name of a user-created script (150) for calling said first, second
and third user-created routines as a link within said one or more web pages (130).

8. The method of any of Claims 1 to 7, wherein said step of running further comprises:
including one or more graphics files (162) capable of being displayed in-line and one or more graphics files (164) suitable for document creation in said one or more web pages.

9. The method of any of Claims 1 to 8, further comprising:
storing said one or more web pages (130) on a web server (120) for later retrieval and viewing; and
accessing and viewing said one or more web pages (130) using a web browser (120).

10. The method of any of Claims 1 to 9, further comprising:
providing at least one index creation routine capable of accessing said one or more web pages (130) and generating at least one index web page (600) including at least a listing (650) of said one or more web pages (130).
